# EUROPEAN PATENT SPECIFICATION

(11) **EP 2 263 293 B1**
(45) Date of publication and mention of the grant of the patent: **29.03.2017**
(21) Application number: 08873713.5
(22) Date of filing: 12.12.2008
(51) Int. Cl.: H02G 3/12, H02G 3/14

(54) **BUILT-IN UNIT FOR ELECTRIC POWER PANELS**
EINBAUEINHEIT FÜR ELEKTRISCHE STROMPANELE
UNITÉ INTÉGRÉE POUR TABLEAUX ÉLECTRIQUES

(30) Priority: 03.04.2008 IT MI20080118 U
(43) Date of publication of application: 22.12.2010
(73) Proprietor: Marlanvil S.p.a., 20159 Milano (IT)
(72) Inventor: BERA, Tiziano, I-20040 Briosco (MI) (IT)
(74) Representative: Tansini, Elio Fabrizio
(86) International application number: PCT/IB2008/055255
(87) International publication number: WO 2009/122242

(56) References cited:
- WO-A-2005/083861
- DE-A1- 10 229 930
- DE-U- 1 955 004
- US-B1- 6 359 219

## Description

The present invention relates to a built-in unit for electric power panels, in particular containers for control/protection panels or the like.

The electric control and protection panels or boards are generally enclosed inside boxes to be either applied to a wall, or mounted flush therewith, i.e. built into the wall so that they are aesthetically more agreeable, less invading and less bulky.

Therefore, only a closing panel is externally visible, said panel covering the commands contained in a small case built into the wall.

The case is fully surrounded by covering building material, such as plastering. In order to prevent smoothing imperfections or possible cracks or defects formed close to the case from remaining in sight, the wall region that is the closest to the case is covered with the panel that generally has a greater extension than the case section.

In addition, the panel is hooked to the case and applied onto the wall from which it protrudes.

While the above mentioned known built-in boxes perform the task of containing the electric control units in a satisfactory manner, the Applicant has found that they have some drawbacks and can be improved under different points of view, mainly as regards their practical installation features, bulkiness and final aesthetic appearance.

In particular, an important problem of the above mentioned built-in boxes arises from the presence of the closing panel that, while having a relatively reduced thickness, protrudes from the wall onto which it is applied, hindering the possibility of concealing the panel itself by means of articles of furniture, for example.

In fact, it is not always possible to locate the electric control units in places, in flats or offices, that are hidden from the sight and therefore, in spite of the attention paid in the most recent years to materials, colours and shapes thereby greatly improving the aesthetic appearance of these panels, it is desirable for them to be hidden from the sight or disguised.

In addition, should not the wall have an even surface, the applied panel does not perfectly mate the wall, thus not only creating aesthetic problems, but also giving rise to possible seepage inside the case.

Finally, above all in rooms that are particularly small or at positions that cannot be easily reached, the presence of a panel protruding from the wall even by one or two centimetres can represent a hindrance.

WO 2005/083861 refers to a wall flush mount supporting device for electric or electronic components, which comprises an external cover or finishing plate in perfectly co-planar position with the wall where the supporting device of the invention is recessed.

The present invention aims at proposing a built-in unit for electric power panels capable of solving the problems found in the known art.

In particular, it is an object of the present invention to provide a built-in unit for electric power panels that can be installed with ease and involving a more reduced bulkiness on the wall.

Another object of the invention is to provide a built-in unit for electric power panels offering a great aesthetic yield.

It is a further object of the invention to provide a built-in box for electric power panels that does not represent a hindrance due to its occupying a wall with protruding elements.

The above objects are substantially achieved by a built-in box for electric control units in accordance with that which is disclosed in the appended claims.

Description of a preferred but not exclusive embodiment of a built-in box for electric control units is now given hereinafter by way of non-limiting example and illustrated in the accompanying drawings, in which:
- Fig. 1a is a perspective view of a built-in box for electric control units, in accordance with the present invention;
- Fig. 1b is a perspective view of the built-in box for electric control units seen in Fig. 1, installed in a first operating configuration;
- Fig. 2 is a perspective view of the built-in box shown in Fig. 1b, in an open position;
- Fig. 3 is a perspective view of a built-in box for electric control units, in a second operating configuration;
- Fig. 4 is an alternative perspective view of the built-in box for electric control units shown in Fig. 3;
- Fig. 5 is a perspective view of a built-in box for electric control units, in a third operating configuration;
- Fig. 6 is a perspective view of a built-in box for electric control units, in a fourth operating configuration;

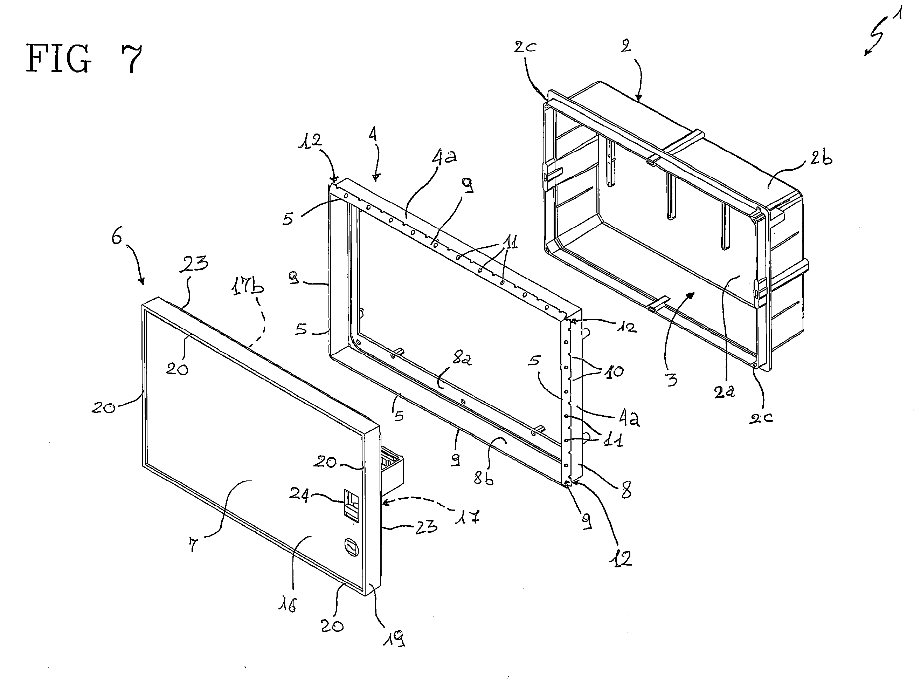

- Fig. 7 is an exploded view of the built-in box for electric control units according to the present invention and in the embodiment shown in Fig. 1;
- Fig. 8 is an exploded view of the built-in box for electric control units in accordance with the present invention and according to the embodiment of the central unit shown in Fig. 6.

With reference to the drawings, a built-in unit for electric power panels in accordance with the present invention has been generally denoted at 1.

This unit 1 comprises a built-in case 2, preferably of quadrilateral shape, comprising a bottom wall 2a and a side wall 2b extending in height from the bottom wall 2a following the whole perimeter of said bottom wall.

The bottom wall 2a and side wall 2b delimit a space inside which, when unit 1 is installed, electric components are housed.

Case 2 acts both as an holding element for said electric components and as a supporting frame since when in use, it is embedded in a wall of a dwelling-house or office.

Unit 1 comprises a closing insert or mask 4 to be applied to a free end 2c of the side wall 2b of case 2, so as to couple it to said case 2, which can be embedded in a wall together with case 2.

Mask 4 has a front edge 5 facing away from the free end 2c of case 2.

Unit 1 further comprises a front panel 6 to be applied to case 2, at the mask 4, and associated with the mask for closing the holding space 3. The front edge 5 surrounds the whole perimeter of panel 6.

At the front, panel 6 has a surface in sight 7 that is coplanar with the front edge 5 of mask 4 when the holding space 3 is completely closed by panel 6. This surface in sight 7 is therefore advantageously flat.

Mask 4 comprises an abutment frame associable with the free end 2c of the side wall 2b and a perimetric wing 9 delimiting the abutment frame 8 at least partly.

The perimetric wing 9 preferably extends from the front edge 5 of mask 4, externally relative to the abutment frame 8, and in an orientation inclined to a lying plane of the front edge 5.

In detail, the abutment frame 8 preferably has an L-shaped section facing the inside of the region delimited by said abutment frame 8. In other words, the abutment frame 8 has a first portion 8a contained in a plane parallel to the lying plane of the front edge 5 and a second portion 8b transverse and preferably orthogonal to the first portion 8a. The top of the second portion 8b carries said front edge 5 of mask 4.

The perimetric wing 9 together with the second portion 8b of the abutment frame 8 defines an undercut external to the abutment frame 8 itself.

The perimetric wing 9 of mask 4 has a plurality of teeth 10 and/or a plurality of through holes 11, adapted to increase gripping of unit 1 when installed.

In fact, following installation of unit 1, the wall portion surrounding unit 1 has to be finished with covering building material, such as plastering; in this way the perimetric wing 9 is buried in the plastering filling the undercut 12 and penetrating into teeth 10 and holes 11.

Due to the inclination of the perimetric wing 9, the covering plastering layer coating said wing becomes progressively thinner as the front edge 5 is approached; in this way the possible formation of cracks or fissures resulting from drying of a thick layer of plastering is avoided.

Following installation of unit 1, the front edge 5 can remain in sight, in coplanar relationship with the outer surface of the wall, while the remaining part of mask 4, in particular the abutment frame 8 and perimetric wing 9, are fully hidden within the wall.

The perimetric wing 9 extends along the whole extension of at least one side 5a of the front edge 5 of mask 4.

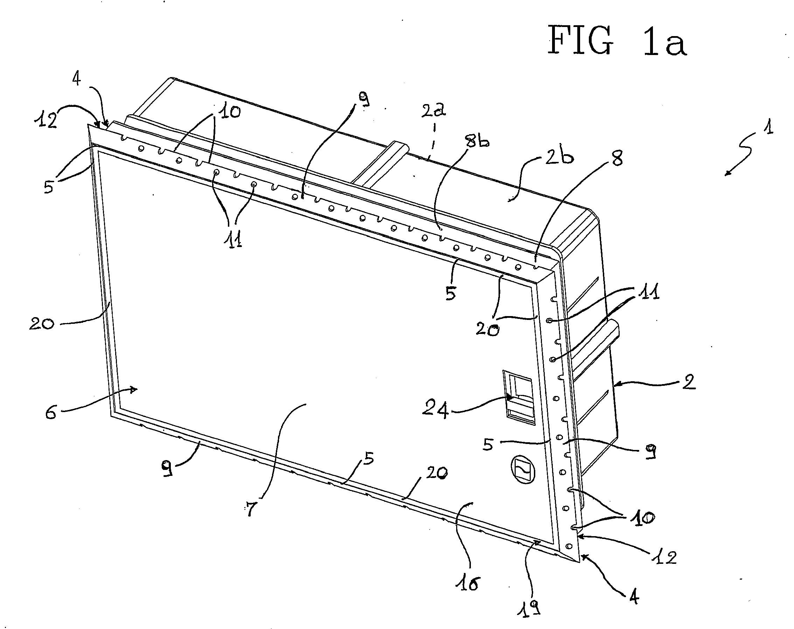

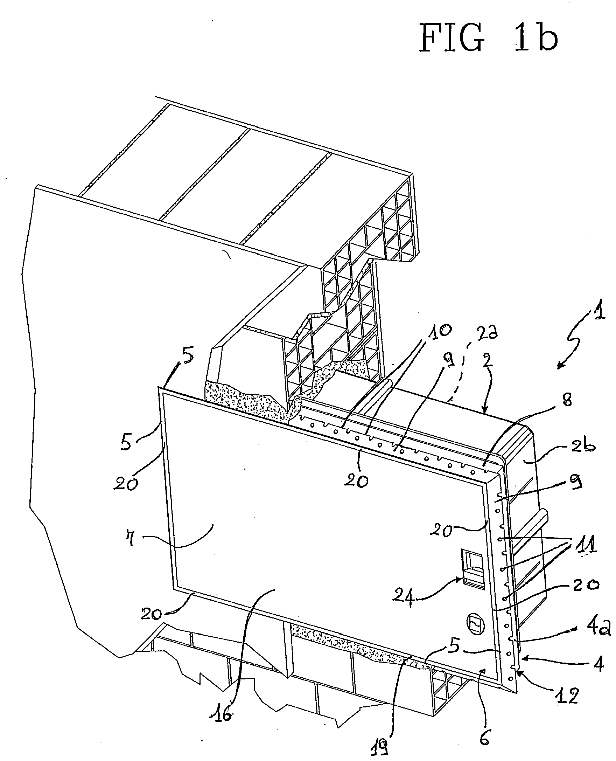

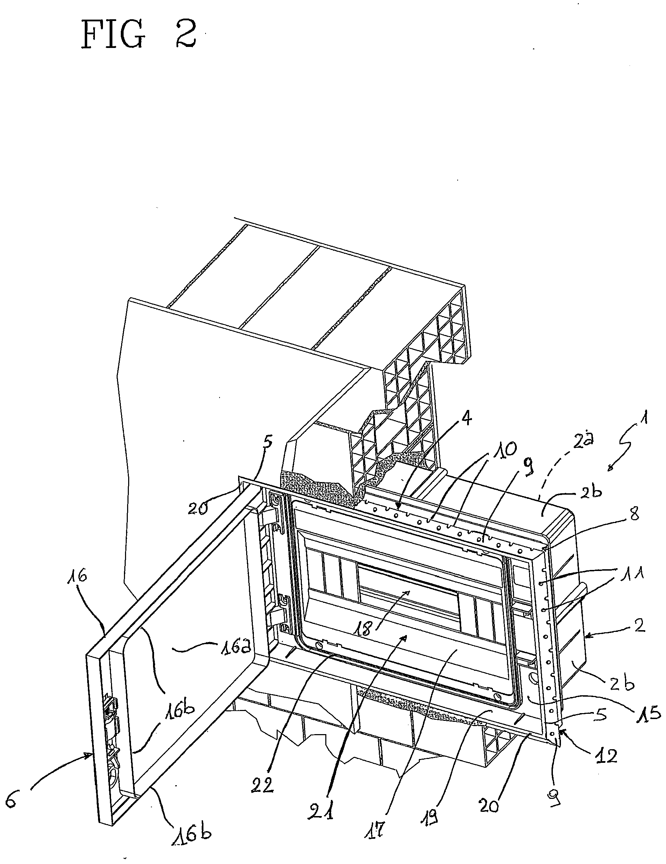

Figure 1a shows a first embodiment of unit 1; in particular it shows a unit 1 adapted to be installed individually inside a wall and Figs. 1b and 2 show this individual unit 1 individually installed in the wall. In this configuration, the perimetric wing 9 preferably extends in a continuous manner along the whole perimeter of the front edge 5 of mask 4, to exert a gripping action on all the four sides of the mask associated with case 2.

Unit 1 being the object of the present invention can also be of the modular type, i.e. it can be combined with other similar units 1 disposed adjacent thereto.

To enable combinations of this type, unit 1 according to an alternative embodiment is provided with connecting elements 13 adapted to keep the different units 1 steady in mutual association, in the relative positions.

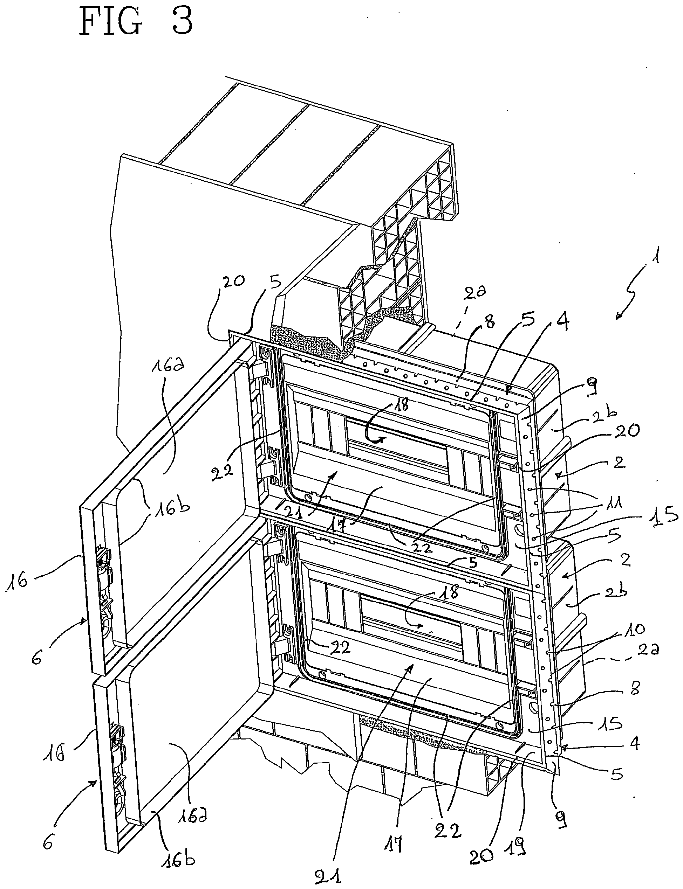

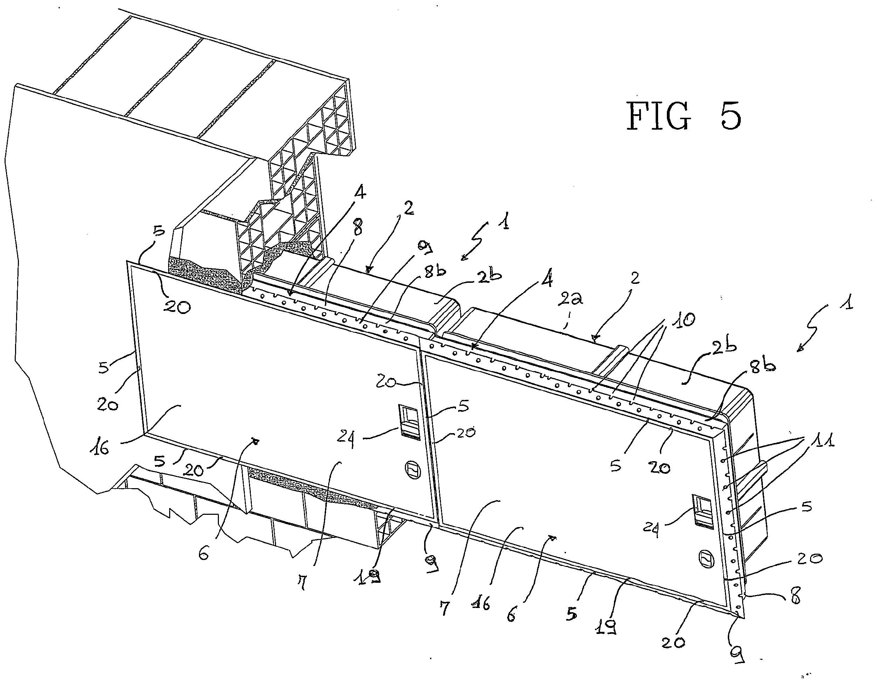

Figs. 3-6 show other variants of unit 1. In particular, these figures show several units 1 associated with each other and installed in mutual side by side relationship, such aligned as to form rows or columns.

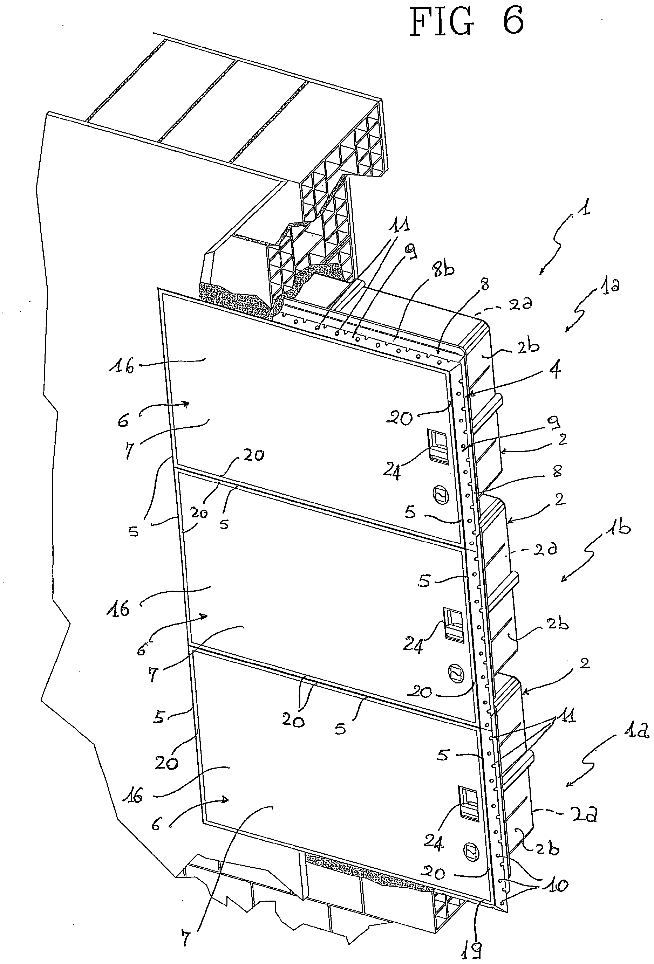

According to these alternative embodiments, the perimetric wing 9 delimits two or three sides 4a at most of mask 4, while the remaining sides 4b can be each engaged with a corresponding side 4b of the mask 4 to be located to an adjacent position. In particular, shown in Fig. 6 are three units 1 aligned along a column. In this configuration, the two units 1a placed at the ends have three sides 4a surrounded by the perimetric wing 9 and only one side 4b, facing the adjacent unit 1b, which is without this perimetric wing 9; the central unit 1b, on the contrary, has the perimetric wing 9 on two sides alone 4a, opposite to each other and aligned with the respective sides 4a of the two preceding end units 1a provided with the perimetric wing 9. In this way, the three units seen frontally define a single block fully surrounded by a single perimetric wing 9 defining a frame for such a block.

The embodiments shown in Figs. 3, 4 and 5, on the contrary, show two units 1 disposed in side by side relationship and mutually connected at only one side 4b of the mask. This side 4b is not provided with the perimetric wing 9 while the three remaining sides 4a of mask 4 are equipped with the perimetric wing 9.

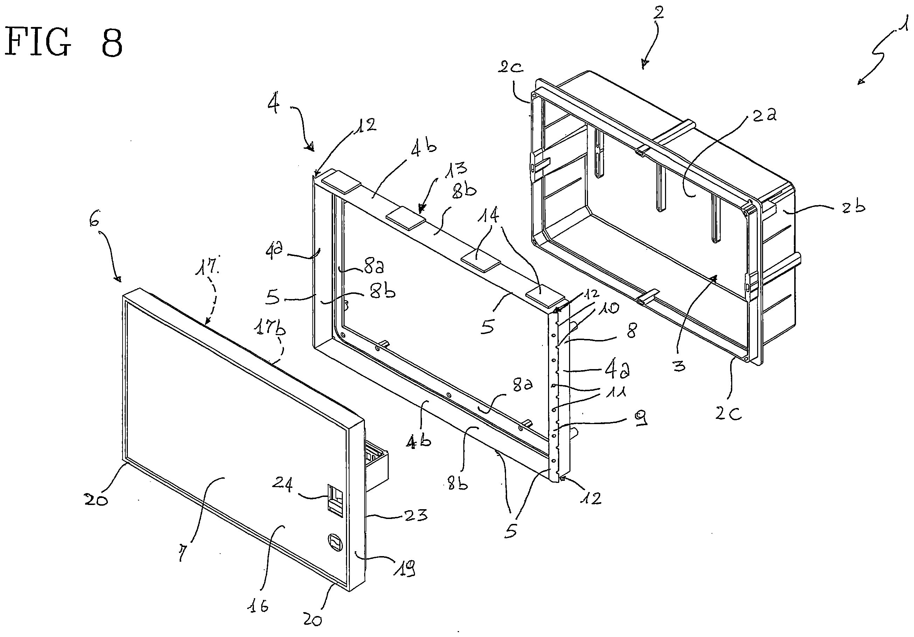

Coupling between two or more units 1 is improved due to the presence of the aforesaid connecting elements 13, comprising at least one positioning reference mark 14 visible in Fig. 8, located on each side 4b of mask 4 devoid of the perimetric wing 9. Two adjacent units 1 are coupled at the respective sides 4b of mask 4 devoid of the perimetric wing 9.

In particular, the positioning reference mark 14 is made on the surface of the second portion 8b of the abutment frame 8 facing outwards. Such a reference mark 14 is for instance identified by mating inserts made on the respective sides 4b of mask 4.

The front panel 6 comprises a front panel 15 and a door 16 hinged thereon, carrying said surface in sight 7.

The front element 15 comprises a wall 17 provided with an opening 18 for housing electric components.

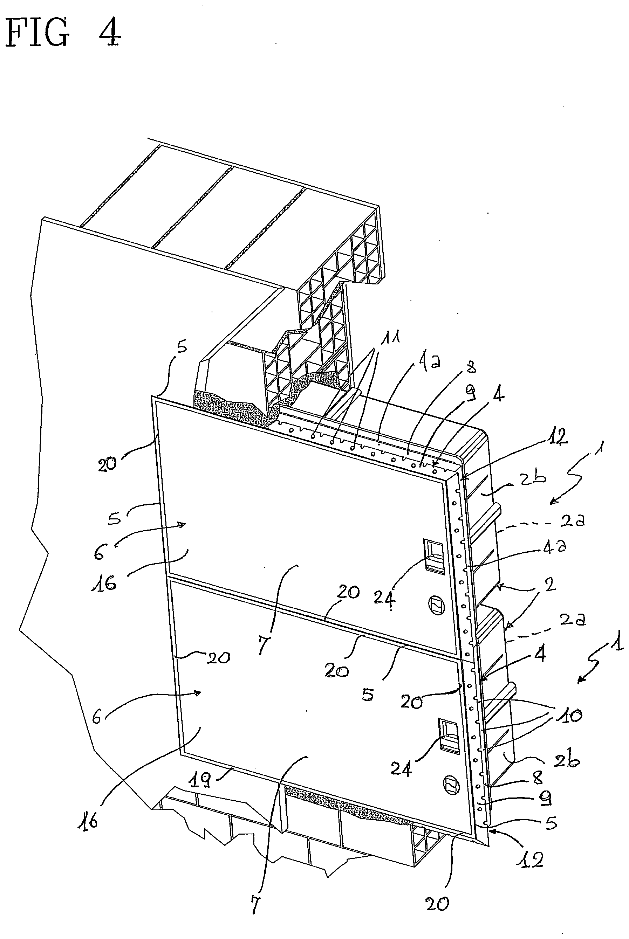

The front element 15 comprises a frame 19 perimetrically surrounding door 16 which is movable between an open position (Fig. 3) and a closed position (Fig. 4) at which door 16 is fully contained within said frame 19.

Frame 19 has an upper edge 20 having a surface in sight which is coplanar with the front edge 5 of mask 4 when panel 6 is associated with mask 4, and coplanar with the surface in sight 7 of door 16 when the latter is in the closed position.

Wall 17 of the front element 15 of panel 6 on a front surface 21 thereof has a first seal 22 against which door 16 abuts, when closed, so as to create a sealing action inside the holding space 3 of unit 1. In particular, the rear surface 16a of door 16 has a raised portion 16b that can be coupled to said first seal 22.

When panel 6 is positioned on case 2 and associated with mask 4, it is housed within the abutment frame 8 of mask 4 and in particular it abuts against the first portion 8a of the abutment frame 8.

In this regard, in order to improve the sealing action between panel 6 and mask 4, wall 17 of the front element 15 of panel 6, on a rear surface 17b thereof facing the holding space 3, has a second seal 23 against which the first portion 8a of the abutment frame 8 abuts.

Door 16 is further provided with an opening and closing element 24, located frontally and fully contained within panel 6 as well.

Unit 1 is preferably made of plastic material; in particular, the front element 15 is preferably made of heat-resistant techno-polymers, while door 16 can be made both of plastic material, polycarbonate for example, and of metal material, preferably steel.

The invention solves the problems found in the known art and achieves important advantages.

First of all, the above described built-in unit for electric power panels allows a simple and practical installation, ensuring steady positioning of same, due to the presence of the perimetric wing.

In addition, the perimetric wing being inclined prevents the covering material from accumulating too much along the unit contour, thus avoiding formation of cracks and fissures resulting from drying of a thick layer of material.

It is also to be considered that due to the possibility of building said unit 1 fully into the wall, leaving in sight only the front surface of the door, the upper edge of the frame and the front edge of the mask which are also contained in the same flat surface coplanar with the wall, the unit can be installed flush with the wall, thus avoiding uncomfortable and unaesthetical protrusions of the covering panel.

Consequently, the unit appears to be an integral part of the wall, is visually less apparent, takes up less room on the wall being less bulky and in addition can be easily painted or covered using the same colours or coating material as the wall, or it can be covered with articles of furniture in order to fully conceal it from the sight, without the protruding panel representing a hindrance or an impediment.

## Claims

1. A built-in unit for electric power panels, comprising:
- a built-in case (2) including a bottom wall (2a) and a side wall (2b) extending from said bottom wall (2a); said bottom wall (2a) and side wall (2b) delimiting a holding space (3) for electric components;
- a closing insert or mask (4) to be applied to a free end (2c) of the side wall of said case (2), adapted to be embedded in a wall together with said case (2) and having a front edge (5) facing away from said free end (2c), said mask (4) comprising an abutment frame (8) associable with the free end (2c) of said side wall (2b) and a perimetric wing (9) delimiting said abutment frame (8) at least partly, wherein the abutment frame (8) has a first portion (8a) contained in a plane parallel to the lying plane of the front edge (5) and a second portion (8b) transverse to the first portion (8a) ;
- a front panel (6) to be applied onto the case (2) at said mask (4), so as to close said holding space (3), wherein, when the holding space (3) is closed, said panel (6) has a surface in sight (7) that is coplanar with, and surrounded by the front edge (5) of said mask (4),
**characterized in that** said front panel (6) is housed within the abutment frame (8) of mask (4) and abuts against said first portion (8a).

2. A unit as claimed in claim 1, wherein said perimetric wing (9) extends from the front edge (5) of the mask (4), externally of said abutment frame (8), in an inclined orientation relative to a lying plane of the front edge (5).

3. A unit as claimed in claim 1 or 2, wherein said perimetric wing (9) of said mask (4) has a plurality of teeth (10) and/or holes (11) adapted to increase gripping of the unit (1) when in use.

4. A unit as claimed in one of claims 1 to 3, wherein said perimetric wing (9) extends along the whole extension of at least one side (4a) of said mask (4).

5. A unit as claimed in anyone of claims 1 to 4, wherein at least two or three sides of said mask (4) are delimited by said perimetric wing (9) and the remaining sides of said mask (4) can be engaged each to a corresponding side (4b) of a mask that can be placed to an adjacent position.

6. A unit as claimed in one of claims 1 to 5, wherein said perimetric wing (9) extends in a continuous manner along the whole perimeter of the front edge (5) of said mask (4).

7. A unit as claimed in claim 5, wherein the sides of said mask (4) that are not delimited by said perimetric wing (9) have each at least one positioning reference mark (14) suitable for engagement with a corresponding reference mark of a mask (4) to be placed to an adjacent position.

8. A unit as claimed in anyone of the preceding claims, wherein said front panel (6) comprises a front element (15) and a door (16) hinged thereon, carrying said surface in sight (7); said front element (15) comprising a wall (17) provided with an opening (18) for housing electric components.

9. A unit as claimed in claim 8, wherein said front element (15) comprises a frame (19) perimetrically surrounding said door (16); said door being movable between an open position and a closed position, wherein the door (16) appears to be fully contained within said frame (19).

10. A unit as claimed in claim 9, wherein said frame (19) has an upper edge (20) having a surface in sight coplanar with the front edge (5) of said mask (4) and with the surface in sight (7) of said door (16) when in the closed position.

11. A unit as claimed in one of claims 8 to 10, wherein the wall (17) of the front element (15) of said panel (6), on a front surface (21) thereof, has a first seal (22) against which the door (16), when closed, abuts for creating a sealing action within the holding space (3) of the unit.

12. A unit as claimed in one of claims 8 to 11, wherein the wall (17) of the front element (15) of said panel (6), on a rear surface (17b) facing said holding space (3), has a second seal (23) against which a first portion (8a) of the abutment frame (8) of said mask (4) abuts.

13. A unit as claimed in anyone of the preceding claims, **characterised in that** it is of the modular type and is provided with connecting elements (13) for associating two or more similar units (1) with each other.

## Patentansprüche

1. Einbaueinheit für elektrische Strompaneele, umfassend:
- ein Einbaugehäuse (2), einschließend eine Bodenwand (2a) und eine Seitenwand (2b), sich erstreckend von der Bodenwand (2a), wobei die Bodenwand (2a) und die Seitenwand (2b) einen Haltebereich (3) für elektrische Komponenten definieren;
- einen Verschlusseinsatz oder eine Verschlussmaske (4), anzubringen an einem freien Ende (2c) der Seitenwand des Gehäuses (2), ausgelegt, um in eine Wand zusammen mit dem Gehäuse (2) eingelassen zu werden, und aufweisend eine Vorderkante (5), die vom freien Ende (2c) abgewandt ist, wobei die Maske (4) einen Anschlagrahmen (8) umfasst, der mit dem freien Ende (2c) der Seitenwand (2b) assoziierbar ist, und einen umfangsseitigen Flügel (9), der den Anschlagrahmen (8) zumindest teilweise begrenzt, wobei der Anschlagrahmen (8) einen ersten Abschnitt (8a) aufweist, der in einer Ebene enthalten ist, die parallel zur Liegeebene der Vorderkante (5) verläuft, und einen zweiten Abschnitt (8b), der quer zum ersten Abschnitt (8a) angeordnet ist;
- ein vorderseitiges Paneel (6), um am Gehäuse (2) an der Maske (4) angebracht zu werden, sodass der Haltebereich (3) verschlossen wird, wobei das Paneel (6), wenn der Haltebereich (3) verschlossen ist, eine sichtbare Oberfläche (7) aufweist, die in der gleichen Ebene mit der Vorderkante (5) der Maske (4) liegt und von dieser umgeben ist, **dadurch gekennzeichnet, dass** das vorderseitige Paneel (6) innerhalb des Anschlagrahmens (8) der Maske (4) untergebracht ist und am ersten Abschnitt (8a) anschlägt.

2. Einheit nach Anspruch 1, wobei sich der umfangsseitige Flügel (9) von der Vorderkante (5) der Maske (4) außerhalb des Anschlagrahmens (8) geneigt ausgerichtet relativ zu einer Liegeebene der Vorderkante (5) erstreckt.

3. Einheit nach Anspruch 1 oder 2, wobei der umfangsseitige Flügel (9) der Maske (4) eine Vielzahl an Zähnen (10) und/oder Löchern (11) besitzt, die ausgelegt sind, um das Greifen der Einheit (1) in Verwendung zu erhöhen.

4. Einheit nach einem der Ansprüche 1 bis 3, wobei sich der umfangsseitige Flügel (9) entlang der gesamten Ausdehnung von mindestens einer Seite (4a) der Maske (4) erstreckt.

5. Einheit nach einem der Ansprüche 1 bis 4, wobei mindestens zwei oder drei Seiten der Maske (4) durch den umfangsseitigen Flügel (9) abgegrenzt sind und die restlichen Seiten der Maske (4) mit einer entsprechenden Seite (4b) einer Maske in Eingriff gelangen können, die an einer angrenzenden Position positioniert werden kann.

6. Einheit nach einem der Ansprüche 1 bis 5, wobei sich der umfangsseitige Flügel (9) durchgehend entlang des gesamten Umfangs der Vorderkante (5) der Maske (4) erstreckt.

7. Einheit nach Anspruch 5, wobei die Seiten der Maske (4), die nicht durch den umfangsseitigen Flügel (9) abgegrenzt sind, jeweils mindestens eine Positionierungsreferenzmarkierung (14) aufweisen, die geeignet ist, um in eine entsprechende Referenzmarkierung einer Maske (4) einzugreifen, die an einer angrenzenden Position zu positionieren ist.

8. Einheit nach einem der vorhergehenden Ansprüche, wobei das vorderseitige Paneel (6) ein vorderseitiges Element (15) und eine Tür (16) umfasst, die gelenkig daran befestigt ist, tragend die sichtbare Oberfläche (7), wobei das vorderseitige Element (15) eine Wand (17) umfasst, versehen mit einer Öffnung (18) zur Unterbringung elektrischer Komponenten.

9. Einheit nach Anspruch 8, wobei das vorderseitige Element (15) einen Rahmen (19) umfasst, der umfangsseitig die Tür (16) umgibt, wobei die Tür zwischen einer geöffneten Position und einer geschlossenen Position bewegbar ist, wobei die Tür (16) in vollem Umfang innerhalb des Rahmens (19) enthalten erscheint.

10. Einheit nach Anspruch 9, wobei der Rahmen (19) eine Oberkante (20) besitzt, aufweisend eine sichtbare Oberfläche, die in der gleichen Ebene wie die Vorderkante (5) der Maske (4) und wie die sichtbare Oberfläche (7) der Tür (16) liegt, wenn sich diese in der geschlossenen Position befindet.

11. Einheit nach einem der Ansprüche 8 bis 10, wobei die Wand (17) des vorderseitigen Elements (15) des Paneels (6) auf einer vorderseitigen Oberfläche (21) davon eine erste Dichtung (22) besitzt, gegen die die Tür (16) anschlägt, wenn sie geschlossen ist, um eine Abdichtungswirkung innerhalb des Haltebereichs (3) der Einheit zu schaffen.

12. Einheit nach einem der Ansprüche 8 bis 11, wobei die Wand (17) des vorderseitigen Elements (15) des Paneels (6) auf einer rückseitigen Oberfläche (17b), die dem Haltebereich (3) zugewandt ist, eine zweite Dichtung (23) besitzt, gegen die ein erster Abschnitt (8a) des Anschlagrahmens (8) der Maske (4) anschlägt.

13. Einheit nach einem der vorhergehenden Ansprüche, **dadurch gekennzeichnet, dass** sie vom modularen Typ und mit Verbindungselementen (13) versehen ist, um zwei oder mehrere ähnliche Einheiten (1) miteinander zu assoziieren.

## Revendications

1. Unité intégrée pour tableaux électriques, comprenant :
- un boîtier intégré (2) incluant une paroi de fond (2a) et une paroi latérale (2b) se prolongeant de ladite paroi de fond (2a) ; lesdites paroi de fond (2a) et paroi latérale (2b) délimitant un espace de maintien (3) pour des composants électriques ;
- un insert de fermeture ou masque (4), à appliquer à une extrémité libre (2c) de la paroi latérale dudit boîtier (2), pouvant être intégré dans une paroi avec ledit boîtier (2) et comportant un bord antérieur (5) situé à l'opposé de ladite extrémité libre (2c), ledit masque (4) comprenant un châssis de butée (8) pouvant être associé à l'extrémité libre (2c) de ladite paroi latérale (2b) et une aile périphérique (9) délimitant ledit châssis de butée (8) au moins en partie, dans laquelle le châssis de butée (8) comporte une première partie (8a) contenue dans un plan parallèle au plan d'appui du bord antérieur (5) et une seconde partie (8b) transversale à la première partie (8a) ;
- un panneau antérieur (6) à appliquer sur le boîtier (2) au niveau dudit masque (4), de manière à fermer ledit espace de maintien (3), dans laquelle, lorsque l'espace de maintien (3) est fermée, ledit panneau (6) comporte une surface apparente (7) étant coplanaire au, et entourée par le bord antérieur (5) dudit masque (4), **caractérisée en ce que** ledit panneau antérieur (6) est logé à l'intérieur du châssis de butée (8) du masque (4) et vient buter contre ladite première partie (8a).

2. Unité selon la revendication 1, dans laquelle ladite aile périphérique (9) se prolonge du bord antérieur (5) du masque (4), extérieurement au dit châssis de butée (8), dans une orientation inclinée par rapport à un plan d'appui du bord antérieur (5).

3. Unité selon la revendication 1 ou 2, dans laquelle ladite aile périphérique (9) dudit masque (4) comporte une pluralité de dents (10) et/ou d'orifices (11) adaptés pour augmenter la préhension de l'unité (1) en fonctionnement.

4. Unité selon l'une des revendications de 1 à 3, dans laquelle ladite aile périphérique (9) se prolonge le long de toute l'extension d'au moins un côté (4a) dudit masque (4).

5. Unité selon l'une quelconque des revendications de 1 à 4, dans laquelle au moins deux ou trois côtés dudit masque (4) sont délimités par ladite aile périphérique (9) et les côtés restants dudit masque (4) pouvant chacun se mettre en prise avec un côté correspondant (4b) d'un masque pouvant être placé dans une position adjacente.

6. Unité selon l'une des revendications de 1 à 5, dans laquelle ladite aile périphérique (9) se prolonge de façon continue le long de tout le périmètre du bord antérieur (5) dudit masque (4).

7. Unité selon la revendication 5, dans laquelle les côtés dudit masque (4), n'étant pas délimités par ladite aile périphérique (9), comportent chacun au moins une marque de référence de positionnement (14) pouvant se mettre en prise avec une marque de référence correspondante d'un masque (4) à placer dans une position adjacente.

8. Unité selon l'une quelconque des revendications précédentes, dans laquelle ledit panneau antérieur (6) comprend un élément antérieur (15) et une porte (16) montée articulée sur celui-ci portant ladite surface apparente (7) ; ledit élément antérieur (15) comprenant une paroi (17) pourvue d'une ouverture (18) pour loger des composants électriques.

9. Unité selon la revendication 8, dans laquelle ledit élément antérieur (15) comprend un châssis (19) entourant de façon périphérique ladite porte (16) ; ladite porte étant mobile entre une position d'ouverture et une position de fermeture, dans laquelle la porte (16) apparaît pour être complètement contenue à l'intérieur dudit châssis (19).

10. Unité selon la revendication 9, dans laquelle ledit châssis (19) comporte un bord supérieur (20) comportant une surface apparente coplanaire au bord antérieur (5) dudit masque (4) et à la surface apparente (7) de ladite porte (16) lorsqu'elle se trouve dans la position fermée.

11. Unité selon l'une des revendications de 8 à 10, dans laquelle la paroi (17) de l'élément antérieur (15) dudit panneau (6), sur une surface antérieure (21) de celui-ci, comporte un premier joint d'étanchéité (22) contre lequel la porte (16), lorsqu'elle est fermée, vient buter pour créer une action d'étanchéité à l'intérieur de l'espace de maintien (3) de l'unité.

12. Unité selon l'une des revendications de 8 à 11, dans laquelle la paroi (17) de l'élément antérieur (15) dudit panneau (6), sur une surface postérieure (17b) faisant face au dit espace de maintien (3), comporte un seconde joint d'étanchéité (23) contre lequel vient buter une première partie (8a) du châssis de butée (8) dudit masque (4).

13. Unité selon l'une quelconque des revendications précédentes, **caractérisée en ce qu'**elle est de type modulaire et pourvue d'éléments de raccordement (13) servant à associer deux ou plusieurs unités (1) similaires les unes aux autres.
